(19) Europäisches Patentamt European Patent Office Office européen des brevets

(11) **EP 3 919 152 A1**

(12) **EUROPEAN PATENT APPLICATION**
published in accordance with Art. 153(4) EPC

(43) Date of publication:
**08.12.2021 Bulletin 2021/49**

(51) Int Cl.:
**B01D 39/20** (2006.01)     **F01N 3/022** (2006.01)

(21) Application number: **20783334.4**

(86) International application number:
**PCT/JP2020/006165**

(22) Date of filing: **18.02.2020**

(87) International publication number:
**WO 2020/202848 (08.10.2020 Gazette 2020/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.03.2019 JP 2019068163**

(71) Applicant: **Denso Corporation
Aichi 448-8661 (JP)**

(72) Inventors:
• **ISHIHARA Mikio**
  **Kariya-city, Aichi 448-8661 (JP)**
• **MIZUTANI Keisuke**
  **Nisshin-city, Aichi 470-0111 (JP)**

(74) Representative: **Kuhnen & Wacker
Patent- und Rechtsanwaltsbüro PartG mbB
Prinz-Ludwig-Straße 40A
85354 Freising (DE)**

(54) **EXHAUST GAS PURIFICATION FILTER**

(57)     An exhaust gas purification filter (1) is disposed in an exhaust passage of a gasoline engine. The exhaust gas purification filter (1) has a partition wall (11) having many pores (110), a plurality of cells (12) separated by the partition wall (11), and sealing parts (13) that alternately seal the cells (12) at either end of the filter. In the exhaust gas purification filter (1), assuming average pore size of the partition wall (11) is A $\mu$m and average surface opening size of a surface of the partition wall (11) is B $\mu$m, A $\geq$ B is satisfied, a ratio calculated by a formula 100 $\times$ (A - B) / B is 30% or less, and a tortuosity coefficient of the pore (110) within the partition wall (11) is 6.0 $\times$ $10^3$ or more and 12.5 $\times$ $10^3$ or less.

FIG.13

**EP 3 919 152 A1**

**Description**

[Cross-Reference to Related Applications]

The present application is based on and claims the benefit of earlier Japanese patent application No. 2019-068163 filed on March 29, 2019, the content of which is incorporated herein by reference.

[Technical field]

The present disclosure relates to an exhaust gas purification filter.

[Background Art]

Exhaust gas emitted from an internal combustion engine such as a gasoline engine or a diesel engine contains particulate materials called particulates (hereinafter, sometimes referred to as "PM" as appropriate). An exhaust gas purification filter is disposed in an exhaust passage of the internal combustion engine to collect PM in the exhaust gas and purify the exhaust gas.

Examples of this type of exhaust gas purification filter include a diesel particulate filter (hereinafter, sometimes referred to as "DPF") to collect PM emitted from a diesel engine as described in patent literature 1. The patent literature 1 specifically discloses the following DPF to suppress an increase in pressure loss associated with an increase in accumulation of PM. That is, in the DPF, a partition wall forming a plurality of cells is made of a porous substrate having a porosity of 45 to 70%. In addition, assuming average pore size of the substrate measured by a mercury intrusion technique is (A) $\mu$m and average pore size of the substrate measured by a bubble point method is (B) $\mu$m, an average pore size difference ratio represented by $((A - B) / B) \times 100$ is 35% or less, the average pore size (B) is 15 to 30 $\mu$m, and a maximum pore size measured by the bubble point method is 150 $\mu$m or less.

[Citation List]

[Patent Literature]

[PTL 1] JP 2006-95352 A

[Summary of the Invention]

The amount of PM emitted from a gasoline engine is much smaller than that from a diesel engine. However, since a number of regulations regarding PM have been introduced, a vehicle having a gasoline engine (hereinafter, "gasoline vehicle") is also necessary to be equipped with a gasoline particulate filter (hereinafter, sometimes referred to as "GPF" as appropriate) capable of collecting PM emitted from the gasoline engine.

The number of regulations regarding PM for the gasoline vehicle is expected to become stricter every year. An increase in PM collection efficiency at an initial stage is more important to clear such future regulation. The GPF is sometimes coated with a catalyst to purify exhaust gas. Such catalyst coating blocks some pores of a partition wall, which reduces PM collection efficiency and increases pressure loss. Pressure loss more easily increases in the gasoline engine, in which exhaust gas has high temperature and high flow rate, than in the diesel engine. It is therefore difficult to improve the collection efficiency of a GPF and reduce thr pressure loss while purifying exhaust gas with the catalyst. Thus, GPF coated with no catalyst is increasingly likely to be used as means for clearing the future regulation while separately achieving the two functions, collection of PM and purification of exhaust gas with the catalyst. However, even if the GPF is not coated with catalyst, improving PM collection efficiency still disadvantageously increases pressure loss because of a trade-off relation between the PM collection efficiency and the reduction in pressure loss.

In addition, PM contains solid carbon (soot) and ash derived from engine oil, for example. The ash is a component that remains after recycling the PM. For a gasoline vehicle, it is important to suppress an increase in pressure loss due to residual ash accumulated during long-term use. For a DPF, although pressure loss also increases due to residual ash accumulated during long-term use, suppression of an increase in pressure loss after ash accumulation has not been a serious issue because of having a low exhaust-gas temperature and sufficient room for an exhaust layout.

An object of the present disclosure is to provide an exhaust gas purification filter capable of providing an initial PM collection efficiency, reducing initial pressure loss, and suppressing an increase in pressure loss after ash accumulation.

An aspect of the disclosure is an exhaust gas purification filter disposed in an exhaust passage of a gasoline engine, the exhaust gas purification filter including:

2

a partition wall having many pores,

a plurality of cells separated by the partition wall, and

sealing parts that alternately seal the cells at either end of the filter,

where assuming average pore size of the partition wall is A $\mu$m and average surface opening size of a pore in a surface of the partition wall is B $\mu$m,

A $\geq$ B is satisfied,

a ratio calculated by a formula 100 $\times$ (A - B) / B is 30% or less, and

a tortuosity coefficient of the pores within the partition wall is 6.0 $\times$ 10$^3$ or more and 12.5 $\times$ 10$^3$ or less.

The exhaust gas purification filter has the above specific configuration. In particular, assuming the average pore size of the partition wall is A $\mu$m and the average surface opening size of the pore in the surface of the partition wall is B $\mu$m, A $\geq$ B is satisfied, and the ratio calculated by the formula 100 $\times$ (A - B) / B and the tortuosity coefficient of the pores within the partition wall are each within the specific range. As a result, the exhaust gas purification filter makes it possible to provide an initial PM collection efficiency, reduce initial pressure loss, and suppress an increase in pressure loss after ash accumulation.

Reference numerals in parentheses in claims merely indicates a correspondence relationship with specific means mentioned in an embodiment as described later, and are not intended to limit the technical scope of the present disclosure.

[Brief Description of the Drawings]

The foregoing and other objects, features, and advantages of the disclosure will become readily apparent by the following detailed description with reference to the attached drawings, in which:

Fig. 1 is a perspective view of an exhaust gas purification filter according to a first embodiment;

Fig. 2 is a sectional diagram along a filter axis direction of the exhaust gas purification filter of the first embodiment;

Fig. 3 illustrates flow of an exhaust gas in the exhaust gas purification filter of the first embodiment;

Fig. 4 illustrates an example of a reflected electron image of a partition wall surface taken by a scanning electron microscope during measurement of surface opening size of a pore in the partition wall surface in the exhaust gas purification filter of the first embodiment;

Fig. 5 illustrates an example of a binarized image obtained through binarization of the reflected electron image of Fig. 4;

Fig. 6 illustrates an example of a gray value diagram used for measuring pore surface area of a partition wall;

Fig. 7 schematically illustrates a microstructure of PM;

Fig. 8 is a sectional diagram of a partition wall, showing a partition-wall surface side, into which exhaust gas flows, in an enlarged manner;

Fig. 9 illustrates segregation of PM in the vicinity of a surface opening of the partition wall of Fig. 8;

Fig. 10 illustrates an aspect where ash contained in PM shown in Fig. 9 remains after the PM is recycled;

Fig. 11 illustrates an aspect where PM is collected again in a state where the residual ash shown in Fig. 10 exists;

Fig. 12 illustrates an aspect where ash cross-links a surface opening of a pore in a partition-wall surface by repeating accumulation and recycling of PM in the state of Fig. 11;

Fig. 13 illustrates an aspect where the ash cross-linking the surface opening as shown in Fig. 12 is detached by a flow of exhaust gas and transported to a sealing part on a gas outflow side;

Fig. 14 illustrates a method for measuring a gas permeability coefficient of the exhaust gas purification filter;

Fig. 15(a) illustrates an example of a tape forming sealing parts and attached to an upstream-side end surface of a measurement sample taken from an exhaust gas purification filter, and Fig. 15(b) illustrates an example of a tape forming sealing parts and attached to a downstream-side end surface of the measurement sample taken from the exhaust gas purification filter;

Fig. 16 illustrates an example of a relationship diagram between gas flow rate (X axis) and pressure loss (Y axis); and

Fig. 17 illustrates a relationship between a gas permeability coefficient ratio $k_c/k_{10}$ and a pressure-loss increase rate obtained in an experimental example.

[Description of the Embodiments]

(First Embodiment)

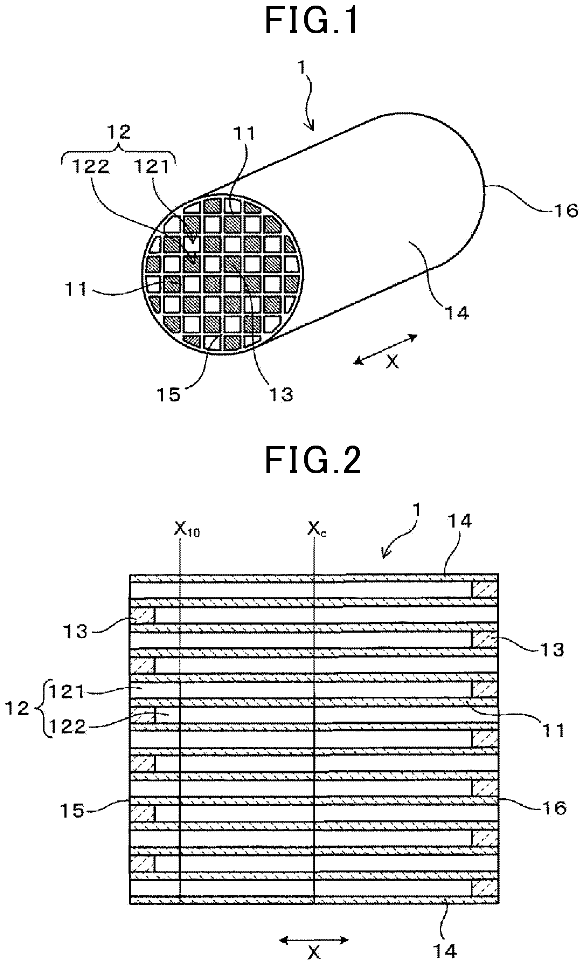

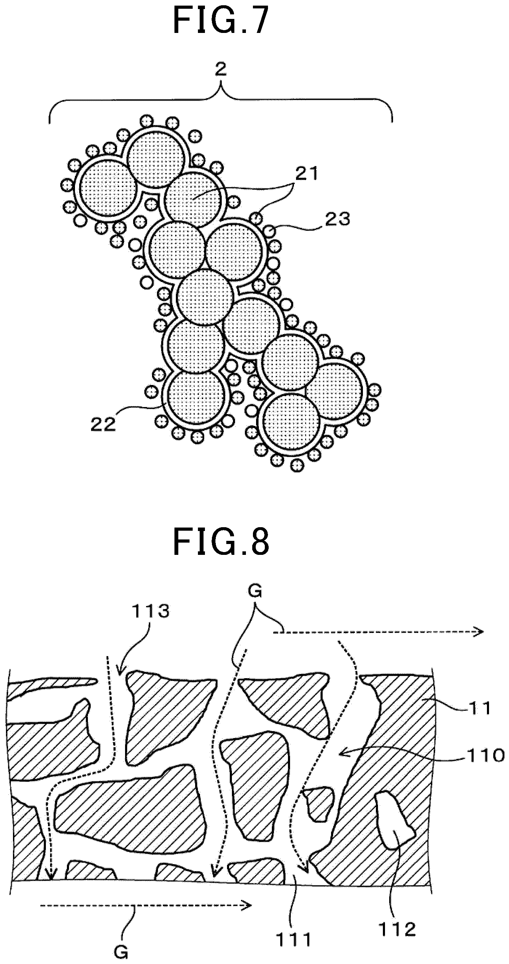

An exhaust gas purification filter according to a first embodiment will now be described with reference to Figs. 1 to 16. As illustrated in Figs. 1 to 3, the exhaust gas purification filter 1 of the first embodiment is disposed and used in an exhaust passage (not shown) of a gasoline engine. In other words, the exhaust gas purification filter 1 is a gasoline particulate filter (GPF) capable of collecting PM 2 (see Fig. 7 as described later) emitted from the gasoline engine. A direction of the two-headed arrow shown in Figs. 1 to 3 is defined as a filter axis direction X of the exhaust gas purification filter 1.

The exhaust gas purification filter 1 includes a partition wall 11, a plurality of cells 12, and sealing parts 13. As illustrated in Figs. 1 and 2, for example, the partition wall 11 can be provided within a skin part 14 formed in a tubular shape such as a cylindrical shape so as to have a certain pattern such as a grid pattern in a cross-sectional view perpendicular to the filter axis direction X. In the exhaust gas purification filter 1, the partition wall 11 and the skin part 14 can each be formed of cordierite, for example. The sealing parts 13 can be formed of ceramics such as, for example, cordierite, but may be formed of another material.

The cells 12 are separated by the partition wall 11. Each cell 12 is enclosed by the partition wall 11 to form a gas passage. An extending direction of the cell 12 is typically coincides with the filter axis direction X. For example, as illustrated in Fig. 1, the cell has a square shape in a cross-sectional view perpendicular to the filter axis direction X. The cell shape may be another shape without limitation, for example, a polygonal shape such as a triangular or hexagonal shape, or a circular shape. The cell shape may be a combination of two or more different shapes.

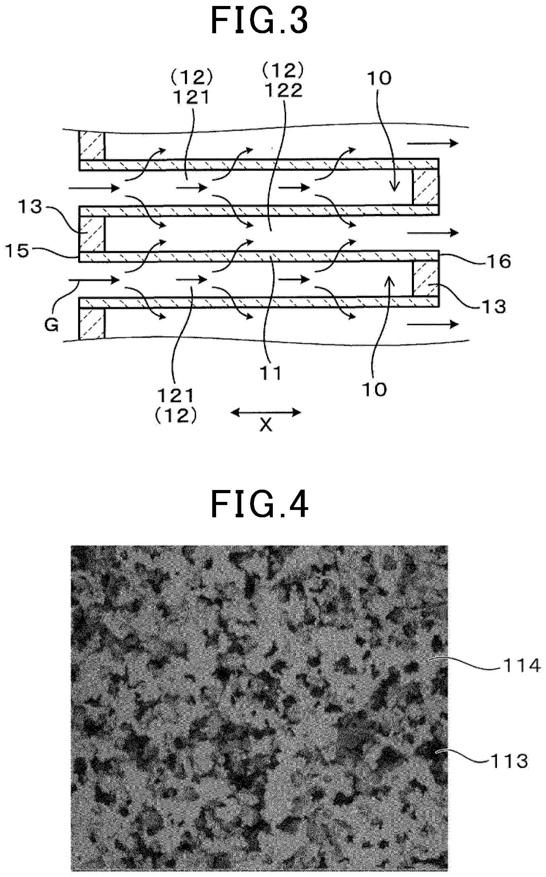

As illustrated in Fig. 2, the cells 12 are alternately sealed by the sealing parts 13 at either end of the filter. Specifically, the cells 12 include first cells 121 opened to a filter end face 15 (upstream-side end face) on an exhaust-gas inflow side and closed by the sealing parts 13 at a filter end face 16 (downstream-side end face) on an exhaust-gas outflow side, and second cells 122 opened to the filter end face 16 on the exhaust-gas outflow side and closed by the sealing parts 13 at the filter end face 15 on the exhaust-gas inflow side. Consequently, as illustrated in Fig. 3, exhaust gas G flows into the first cell 121 from the filter end face 15 on the exhaust-gas inflow side, and flows within the first cell 121 while flowing into the second cell 122 through the porous partition wall 11. The exhaust gas G entering the second cell 122 flows within the second cell 122 and is discharged from the filter end face 16 on the exhaust-gas outflow side.

For example, the first cells 121 and the second cells 122 can be alternately arranged adjacent to each other in a lateral direction orthogonal to the filter axis direction X and also in a longitudinal direction orthogonal to both the filter axis direction X and the lateral direction. In such a case, when the filter end face 15 on the exhaust-gas inflow side or the filter end face 16 on the exhaust-gas outflow side is viewed from the filter axis direction X, the first cells 121 and the second cells 122 are disposed in a checkerboard pattern, for example. The adjacent first and second cells 121 and 122 are separated with the partition wall 11 in between.

As illustrated in Fig. 8, the partition wall 11 has many pores 110. Specifically, the pores 110 in the partition wall 11 include communication pores 111 allowing communication between the adjacent first and second cells 121 and 122. The pores 110 in the partition wall 11 may include non-communication pores 112, which does not allow communication between the adjacent first and second cells 121 and 122, in addition to the communication pores 111.

In the exhaust gas purification filter 1, assuming average pore size of the partition wall 11 (i.e., average pore size within the partition wall 11) is A $\mu$m, the average pore size A of the partition wall 11 is determined as follows.

The average pore size A of the partition wall 11 is measured by a mercury porosimeter using the principle of the mercury intrusion technique. Specifically, a test piece is cut out of the exhaust gas purification filter 1 except a portion in which the sealing part 13 exists. The test piece is formed into a rectangular solid having a length of 15 mm and a width of 15 mm as dimensions in a direction orthogonal to the filter axis direction X and a length of 20 mm in the filter axis direction X. Subsequently, the test piece is accommodated in a measurement cell of the mercury porosimeter, and the measurement cell is depressurized. After that, mercury is introduced into the measurement cell to pressurize the measurement cell, and pore size and pore volume are respectively determined from pressure of the pressurization and volume of the mercury introduced into the pores 110 of the partition wall 11 in the test piece. The measurement is performed within a pressure range from 0.5 to 20000 psia. Note that 0.5 psia corresponds to $0.35 \times 10^{-3}$ kg/mm$^2$, and 20000 psia corresponds to 14 kg/mm$^2$. The pore-size range corresponding to such a pressure range is 0.01 to 420 $\mu$m. A contact angle 140° and a surface tension 480 dyn/cm are used as constants for calculating the pore size from the pressure. The average pore size A means, in the pore size distribution of the partition wall 11, a pore size $d_{50}$ at which cumulative pore volume corresponds to 50% (pore size at an integrated value of pore volume corresponds to 50%).

In the exhaust gas purification filter 1, assuming average surface opening size of the pores 110 in the surface of the partition wall 11 is B $\mu$m, the average surface opening size B of the pores 110 in the surface of the partition wall 11 is determined as follows.

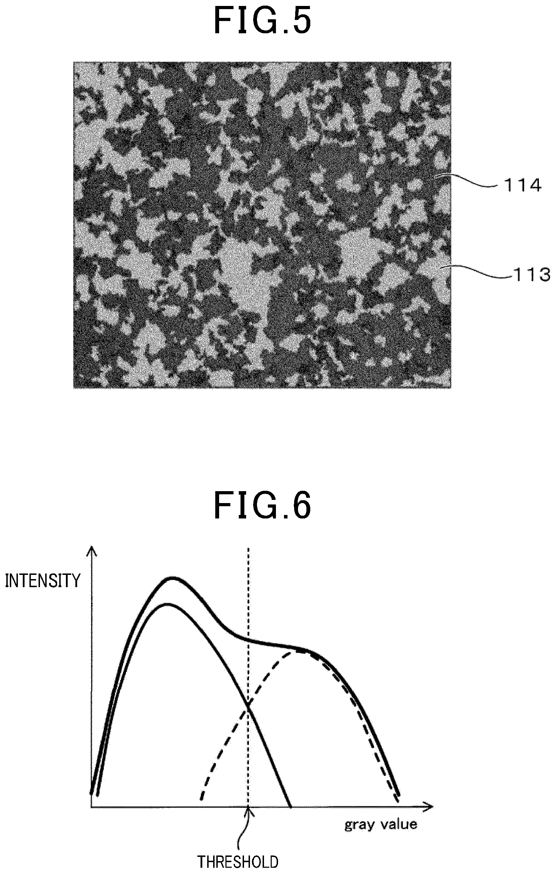

A surface of the partition wall 11 on an inflow side of the exhaust gas G and a surface of the partition wall 11 on an outflow side of the exhaust gas G each have surface openings 113 caused by the pores 110. A scanning electron microscope (SEM) is used to acquire a backscattered electron image of the surface of the partition wall 11 on the inflow side of the exhaust gas G (i.e., the surface of the partition wall 11 facing the first cell 121) except a surface of a portion of the partition wall 11 on which the sealing part 13 exists. At this time, an accelerating voltage may be 10 kV while a magnification may be $\times$ 300. Fig. 4 illustrates an example of the reflected electron image of the surface of the partition wall 11. In the reflected electron image of Fig. 4, a black region represents the surface opening 113 of the surface of the partition wall 11, and a light gray region represents a framework 114 of the surface of the partition wall 11. Subsequently, the photographed image is subjected to binarization processing using image analysis software (WinROOF from MITANI CORPORATION). The binarization processing is intended to distinguish between the surface opening 113 and the framework 114 of the surface of the partition wall 11. Since the surface opening 113 and the framework 114 are different in luminance from each other, the binarization processing is performed after removing residual noise in the photographed image and arbitrarily setting a threshold. Since the threshold varies depending on the photographed image, a threshold is set for each photographed image while the photographed image is visually checked so as to allow the surface opening 113 to be separated from the framework 114. Fig. 5 illustrates an example of a binarized image. In the binarized image of Fig. 5, a light gray region and a black region represent the surface opening 113 and the framework 114, respectively, of the surface of the partition wall 11. Regarding the surface opening 113 of the resultant binarized image, an equivalent circle diameter as a diameter of a true circle having the same area as the surface opening 113 is calculated for each surface opening 113, and all the calculated equivalent circle diameters are integrated, and the integrated value is divided by the number of the surface openings 113. The resultant value is defined as the surface opening size. The average of the surface opening sizes obtained in the above manner from the binarized images, which are acquired at five arbitrary different places on the surface of the partition wall 11, is defined as the average surface opening size B of the pores 110 in the surface of the partition wall 11.

In the exhaust gas purification filter 1, the average pore size A $\mu$m and the average surface opening size B $\mu$m satisfy A $\geq$ B. Moreover, a ratio calculated by a formula 100 $\times$ (A - B) / B, which is represented with the average pore size A and the average surface opening size B, is 30% or less.

In the exhaust gas purification filter 1, a tortuosity coefficient of the pores 110 within the partition wall 11 is defined to be 6.0 $\times$ $10^3$ or more and 12.5 $\times$ $10^3$ or less. Description is now given on the technical meaning and a measurement method of the tortuosity coefficient of the pores 110 within the partition wall 11.

The tortuosity of the pores 110 is in general often defined by a formula (measured length of the communication pore 111) / (thickness of the partition wall 11) after measuring the length of the communication pore 111 within the partition wall 11. In other words, the tortuosity of the pores 110 is a coefficient for controlling permeability of gas through the pores 110 in the partition wall 11. However, a method for measuring the tortuosity is often difficult to perform. For example, it is necessary to measure the entire path length along which gas may flow through many pores 110 and specify only pores through which the gas actually flows. In fact, however, even if the path length of gas can be determined by CT scan, it is difficult to extract only pores through which the gas actually flows. On the other hand, microstructure simulation software "GeoDict" developed by Math2Market GmbH enables the measurement in which gas is passed through a three-dimensional model of the partition wall 11 determined by the CT scan, making it possible to calculate various parameters on the pores 110 within the partition wall 11. Although tortuosity of the pores 110 is included in the parameters, since the tortuosity is strongly correlated with porosity, if the tortuosity is directly used, a tortuosity value varies depending on the porosity. The tortuosity is thus desirably expressed as a coefficient in consideration of the concept of the tortuosity, and consequently a new parameter of a tortuosity coefficient of a pore has been derived.

Specifically, first, as pore size within the partition wall 11 is larger, tortuosity of the pores 110 decreases because existence probability of through-pores 110 increases. Second, as pore surface area (geometric surface area: GSA, hereinafter, omitted) increases, the tortuosity of the pores 110 increases because the number of paths of the pores 110 increases and thus path length increases. Third, although tendency of porosity of the partition wall 11 varies depending on pore size, when pore size is relatively small, the number of paths of the pores 110 increases and thus the path length increases as with the pore surface area, so that the tortuosity of the pores 110 increases. Based on the above teachings, mathematization of such coefficients reveals that the tortuosity of the pores 110 correlates with (pore surface area $\times$ porosity) / pore size. In the exhaust gas purification filter 1, therefore, a value calculated by a formula ((pore surface area [$m^2/m^3$] of partition wall 11) $\times$ (porosity [%] of partition wall 11) / 100) / (average pore size [$\mu$m] of partition wall 11) is defined as tortuosity coefficient of the pores 110. For example, when a pore surface area is 100,000 $m^2/m^3$, an average pore size is 10 $\mu$m, and porosity is 60%, the tortuosity coefficient of the pores 110 is (100,000 $\times$ (60 / 100)) / 10 = 6.0 $\times$ $10^3$. A numerical value before "$\times$ $10^3$" is rounded to the first decimal place.

To calculate the tortuosity coefficient of the pores 110, a value derived by the above-described GeoDict is used as a value of the pore surface area of the partition wall 11. To calculate the tortuosity coefficient of the pores 110, although the average pore size and the porosity of the partition wall 11 may each be calculated by GeoDict, respective values measured by a mercury porosimeter using the principle of a mercury intrusion technique are used as the average pore size and the porosity of the partition wall 11 in this disclosure. Specifically, a value of the above-described average pore size A of the partition wall 11 is used as the average pore size of the partition wall 11 for calculating the tortuosity coefficient of the pores 110. In addition, the porosity of the partition wall 11 can be calculated by the following relational expression. The total pore volume is measured by the mercury porosimeter as described above.

$$\text{Porosity (\%) of partition wall 11} = \text{total pore volume} / (\text{total pore volume} + 1/\text{true specific}$$

$$\text{gravity of partition wall material}) \times 100$$

When the material of the partition wall is cordierite, 2.52 may be used as a true specific gravity of the cordierite.

The pore surface area of the partition wall 11 is determined as follows. A partition wall piece is cut out of the exhaust gas purification filter 1 except a portion in which the sealing part 13 exists. The partition wall piece is formed into a rectangular solid shape having a length of about 600 $\mu$m in the filter axis direction X, a width of about 600 $\mu$m in a partition-wall surface direction orthogonal to the filter axis direction X, and a thickness equal to the partition wall thickness. Subsequently, the partition wall piece is resin-embedded while being vacuum-deaerated and thus formed as an X-ray CT imaging sample. For this sample, an X-ray CT apparatus "Versa XRM-500" from Xradia, Inc. is used to acquire a continuous tomographic image under imaging condition: voltage of 80 kV, step of 0.1°, and resolution of 0.684787 $\mu$m /pixel. The resultant TIFF continuous image is read under a condition of 0.684787 $\mu$m /voxel using the importGeo-Vol function as one interface of GeoDict being microstructure simulation software developed by Math2Market GmbH. Subsequently, the partition wall piece is modeled in three dimensions with an intersection as a threshold, the intersection being formed when a profile is divided into two peaks in the gray value diagram as shown in Fig. 6, in order to separate the framework and the space of the read image from each other. Subsequently, noise is removed from the three-dimensional model, and unnecessary portions are removed to obtain 900 voxels $\times$ 600 voxels $\times$ partition wall thickness (voxel). Subsequently, while Estimate Surface Area among functions of Porodict as one of the GeoDict modules is used, the pore surface area (geometric surface area) of the three-dimensional model is derived from Estimate of real surface area, the analysis of which is described in detail in "J. Ohser and F. Mucklich (the u is u-umlaut in German), Statistical Analysis of Microstructures in Materials Science, Wiley and Sons, 2000, p. 115". Such measurement is performed for each of partition wall pieces cut out of six portions, and the average of the derived values of the pore surface areas is defined as the pore surface area of the partition wall 11. Specifically, the partition wall pieces are taken from six portions: a central portion, an upstream-side portion near the sealing part 13 on the filter end face 15 side, and a downstream-side portion near the sealing part 13 on the filter end face 16 side in the filter axis direction passing through the center of the diameter of the exhaust gas purification filter 1; and a central portion, an upstream-side portion near the sealing part 13 on the filter end face 15 side, and a downstream-side portion near the sealing part 13 on the filter end face 16 side in the filter axis direction at a peripheral potion of the exhaust gas purification filter 1.

In the exhaust gas purification filter 1, a value of the average pore size A of the partition wall 11 defined as described above is equal to or larger than a value of the average surface opening size B of the pores 110 in the surface of the partition wall 11 (A $\geq$ B). Further, a ratio calculated by the formula, 100 $\times$ (A - B) / B, in which A represents the average pore size A of the partition wall 11 and B represents the average surface opening size of the pores 110 in the surface of the partition wall 11, and the tortuosity coefficient of the pores 110 within the partition wall 11 are each within the above-described specific range. This allows the exhaust gas purification filter 1 to provide an initial PM collection efficiency, reduce an initial pressure loss, and suppress an increase in pressure loss after ash accumulation. A mechanism through which such effects are provided is now described with reference to Figs. 7 to 13.

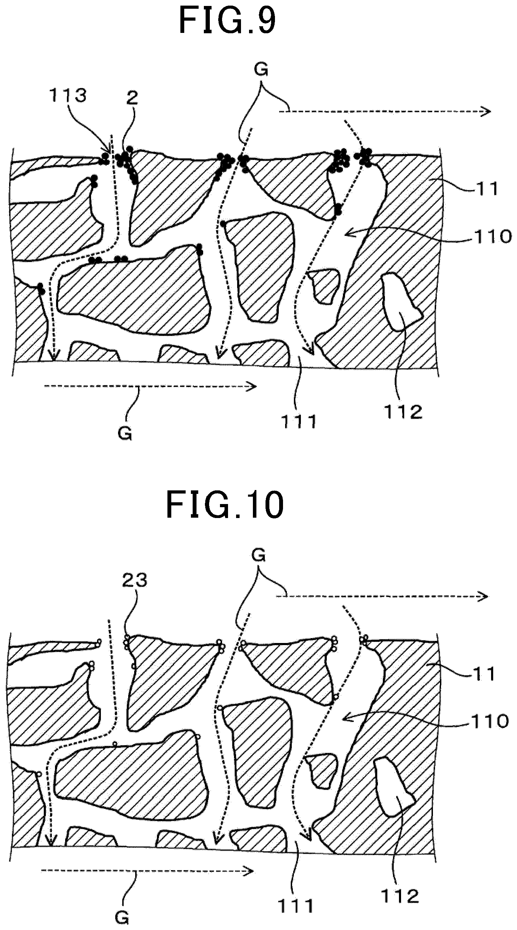

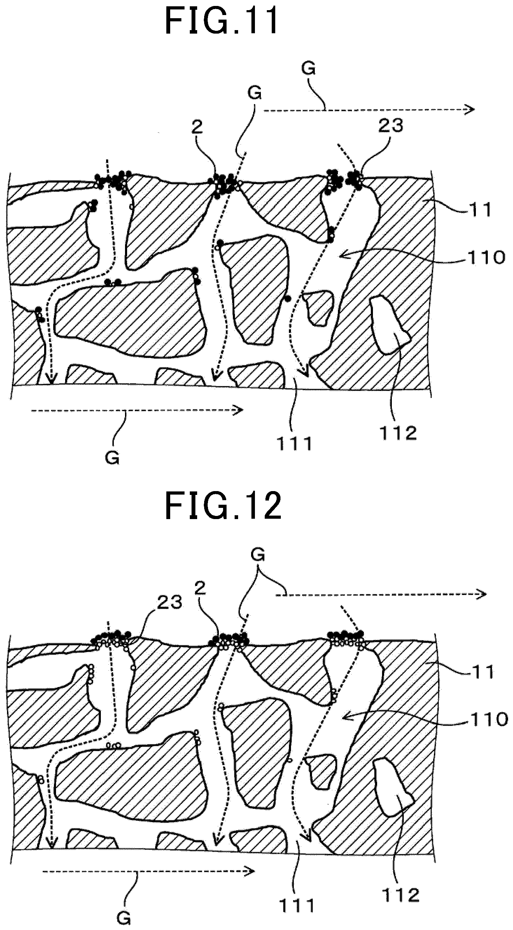

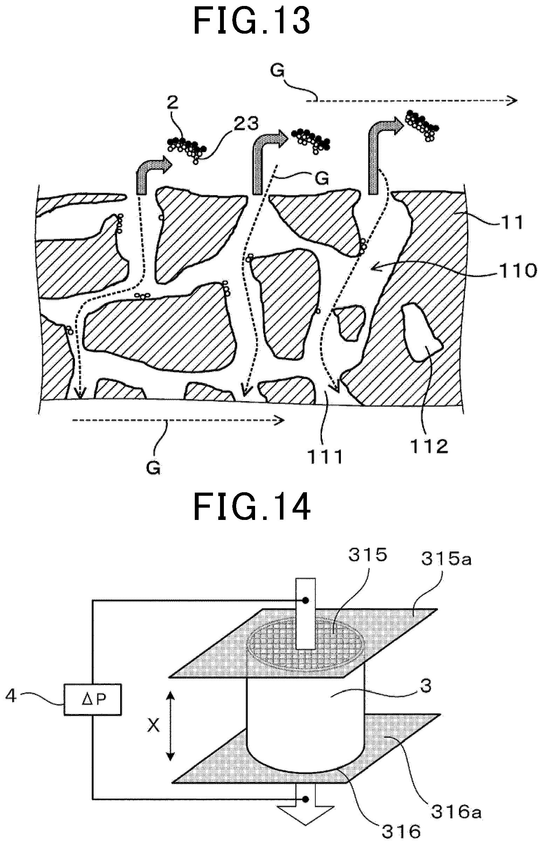

As illustrated in Fig. 7, PM 2 contains a soluble organic fraction (SOF) 22 and ash 23 derived from engine oil, in addition to solid carbon (soot) 21 as a main component. As illustrated in Fig. 8, PM 2 is collected during passing through the pores 110 in the partition wall 11. Each arrow in Fig. 8 indicates the exhaust gas G flowing through the pores 110. In a partition wall 11, assuming the average pore size of the partition wall 11 is A $\mu$m and the average surface opening size of the surface of the partition wall 11 is B $\mu$m, A $\geq$ B is satisfied, and a ratio calculated by the formula 100 $\times$ (A - B) / B and the tortuosity coefficient of the pores 110 within the partition wall 11 are each within the above-described specific range. When PM 2 containing ash 23 is collected by such a partition wall 11, PM 2 segregates in the vicinity of each surface opening 113 formed in the surface of the partition wall 11 on the inflow side of the exhaust gas G, as illustrated in Fig. 9. Further, as illustrated in Fig. 10, ash 23 contained in PM 2 still remains after recycling of the PM 2. As illustrated in Fig. 11, if PM 2 containing ash 23 is collected again by the partition wall 11 in a state where residual ash 23 exists, the PM 2 is accumulated in the vicinity of the residual ash 23 while segregating in the vicinity of the surface opening 113 in the surface of the partition wall 11. As illustrated in Fig. 12, repeating accumulation of PM 2 containing ash 23 and recycling of PM 2 leads to cross-linkage of the surface openings 113 in the surface of the partition wall 11 by the ash 23. After that, as illustrated in Fig. 13, the ash 23, which has become cross-linked at the surface opening 113, is becomes detached during recycling of PM 2 or by flow of the exhaust gas G, and the detached ash 23 is transported to the sealing part 13 on the gas outflow side. The transported ash 23 is accumulated on a filter downstream-most part 10 (see Fig. 3, which may be referred to as filter bottom part). Although ash 23 covering the outer surface of the partition wall 11 increases pressure loss, the ash 23 accumulated on the filter downstream-most part 10 is less likely to increase pressure loss. That is, using the partition wall 11, in which assuming the average pore size of the partition wall 11 is A $\mu$m and the average surface opening size of the surface of the partition wall 11 is B $\mu$m, A $\geq$ B is satisfied, and a ratio calculated by the formula $100 \times (A - B) / B$ and the tortuosity coefficient of the pores 110 within the partition wall 11 are each within the above-described specific range, causes cross-linkage of the ash 23 at the surface opening 113 of the partition wall 11, allowing easy detaching of the ash 23. As a result, the amount of the ash 23 accumulated on the filter downstream-most part 10 can be made larger than the amount of the ash 23 covering the outer surface of the partition wall 11. An increase in the ash 23 accumulated on the filter downstream-most part 10 increases gas permeability of the partition wall 11 after accumulation of ash 23, leading to lower pressure loss. Through the above mechanism, the exhaust gas purification filter 1 probably provides the initial PM collection efficiency and reduces initial pressure loss, and besides suppresses an increase in pressure loss after accumulation of the ash 23.

In the exhaust gas purification filter 1, if the average pore size A is smaller than the average surface opening size B ($A < B$), the PM 2 containing the ash 23 easily enters the pores 110 of the partition wall 11, and thus the ash 23 is easily accumulated in the pores 110. As a result, the ash 23 cross-linking on the surface opening 113 is less likely to be detached, and thus it is difficult to suppress an increase in pressure loss due to the ash 23 residually accumulated due to a long-term use of a vehicle.

In the exhaust gas purification filter 1, if the ratio calculated by the formula, $100 \times (A - B) / B$, is more than 30%, a difference between the average pore size A and the average surface opening size B becomes larger, and the PM 2 containing the ash 23 is easily accumulated within the partition wall 11 and the ash 23 is less likely to be detached, causing an increase in pressure loss due to the ash 23 residually accumulated due to a long-term use of a vehicle. Since the exhaust gas purification filter 1 satisfies $A \geq B$ as described above, the surface opening size of the pores 110 in the surface of the partition wall 11 is smaller than the pore size within the partition wall 11, and the ratio calculated by the formula $100 \times (A - B) / B$ is 0% or more.

In the exhaust gas purification filter 1, if the tortuosity coefficient of the pores 110 within the partition wall 11 is less than $6.0 \times 10^3$, PM collection efficiency is reduced due to a reduction in frequency of contact of the PM 2 with pore surfaces. Further, PM 2 containing the ash 23 is easily accumulated within the partition wall 11 and the ash 23 is less likely to be detached, causing an increase in pressure loss due to the ash 23 residually accumulated due to a long-term use of a vehicle. On the other hand, if the tortuosity coefficient of the pores 110 within the partition wall 11 exceeds $12.5 \times 10^3$, gas complicatedly flows through the partition wall 11 and is less likely to be released, and thus initial pressure loss tends to increase. The tortuosity coefficient of the pores 110 is preferably $6.5 \times 10^3$ or more from the viewpoint of the initial PM collection efficiency and pressure loss after accumulation of ash 23.

In the exhaust gas purification filter 1, the average pore size A of the partition wall 11 may be 5 to 15 $\mu$m. When the average pore size A of the partition wall 11 is 5 $\mu$m or more, the initial pressure-loss reduction effect is easily exhibited. When the average pore size A is less than 15 $\mu$m, the initial PM collection performance is securely obtained, and pressure loss tends not to increase after accumulation of ash 23.

In the exhaust gas purification filter 1, the porosity of the partition wall 11 may be 55 to 70%. When the porosity of the partition wall 11 is 55% or more, since a flow channel, along which the exhaust gas G passes through the partition wall 11, is easily provided, initial pressure loss is easily reduced. When the porosity of the partition wall 11 is 70% or less, strength of the exhaust gas purification filter 1 itself is easily maintained, making it easy to suppress cracking due to stress applied during casing or heat generation during recycling of PM 2. The porosity of the partition wall 11 may be preferably 57% or more, more preferably 60% or more from the viewpoint of a reduction in initial pressure loss. The porosity of the partition wall 11 may be preferably 68% or less, more preferably 67% or less, further preferably 66% or less from the viewpoint of increasing strength of the exhaust gas purification filter 1. Any appropriate combination of such upper and lower limits may be used. A value determined by the mercury porosimeter using the principle of the mercury intrusion technique is used as the porosity of the partition wall 11.

The exhaust gas purification filter 1 may be configured such that in a state where 20 to 40 g/L of ash 23 is accumulated, assuming the partition wall 11 has a gas permeability coefficient $k_{10}$ at a position $X_{10}$ (see Fig. 2) 10 mm away from the filter end face 15 on the exhaust-gas inflow side and a gas permeability coefficient $k_c$ at a central position $X_c$ (see Fig. 2) between the filter end face 15 on the exhaust-gas inflow side and the filter end face 16 on the exhaust-gas outflow side, a value of a gas-permeability coefficient ratio $k_c/k_{10}$ is 1.5 or less. Such a configuration makes it possible to reliably suppress an increase in pressure loss after accumulation of ash 23.

If the accumulation amount of the ash 23 is smaller than 20 g/L, no ash 23 or only a slight amount of ash 23 is accumulated on the outside of the partition wall 11 at both the position $X_{10}$ 10 mm away from the filter end face 15 on the exhaust-gas inflow side and the central position $X_c$ between the filter end face 15 on the exhaust-gas inflow side and the filter end face 16 on the exhaust-gas outflow side, and thus the effect of detaching of the ash 23 is less likely to be exhibited. Hence, the accumulation amount of the ash 23 is determined to be 20 g/L or more. On the other hand, if the accumulation amount of the ash 23 is larger than 40 g/L, the ash 23 detached and accumulated on the filter downstream-most part 10 increases and is likely to extend to the central position $X_c$ between the filter end face 15 on the exhaust-gas inflow side and the filter end face 16 on the exhaust-gas outflow side, and thus the effect of detaching of the ash 23 is less likely to be exhibited. Hence, the accumulation amount of the ash 23 is determined to be 40 g/L or less.

A value of $k_c/k_{10}$ is an index indicating a magnitude relationship between the gas permeability coefficient $k_c$

and the gas permeability coefficient $k_{10}$. A value of the gas permeability coefficient of the partition wall 11 becomes smaller with an increase in accumulation of the ash 23. Flow rate of the exhaust gas G introduced into the cell 12 of the exhaust gas purification filter 1 is higher at the position $X_{10}$ 10 mm away from the filter end face 15 on the exhaust-gas inflow side than at the central position $X_c$ between the filter end face 15 on the exhaust-gas inflow side and the filter end face 16 on the exhaust-gas outflow side. In other words, the following relationship exists: the accumulation amount is larger at the position $X_{10}$ 10 mm away from the filter end face 15 on the exhaust-gas inflow side than at the central position $X_c$ between the filter end face 15 on the exhaust-gas inflow side and the filter end face 16 on the exhaust-gas outflow side. To consider this in terms of the gas permeability coefficient, the gas permeability coefficients $k_{10}$ and $k_c$ after accumulation of the ash 23 have a relationship where the gas permeability coefficient $k_c$ is larger than the gas permeability coefficient $k_{10}$. That is, the value of $k_c/k_{10}$ is commonly large in an existing exhaust gas purification filter without the configuration of this disclosure. Specifically, as described later in an experimental example, the value of $k_c/k_{10}$ of more than 1.5 undesirably increases a pressure-loss increase rate after accumulation of the ash 23 relative to the initial pressure loss. This is probably because the ash 23 on the surface of the partition wall 11 at the position $X_{10}$ 10 mm away from the filter end face 15 on the exhaust-gas inflow side is not detached but is accumulated within the pores 110. Consequently, the value of $k_c/k_{10}$ is preferably 1.5 or less to control the pressure-loss increase rate. This is probably because detaching of the ash 23 is accelerated on the surface of the partition wall 11 around the position $X_{10}$ 10 mm away from the filter end face 15 on the exhaust-gas inflow side. However, the ash 23 is not wholly detached and transported to a region near the sealing part 13 at the filter downstream-most part 10 and accumulated in the region. Part of the ash 23 remains in the partition wall 11 or in the vicinity of the surface of the partition wall 11. As a result, the pressure-loss increase rate after accumulation of the ash 23 relative to the initial pressure loss can be controlled low within a range of the value of $k_c/k_{10}$ of 1.5 or less.

The gas permeability coefficients $k_{10}$ and $k_c$ are each determined as follows. First, 20 to 40 g/L of ash 23 is accumulated on the exhaust gas purification filter 1. The ash 23 can be accumulated as follows: gasoline containing 2% ash-forming material derived from engine oil is used to power a gasoline engine, so that the ash is accumulated on an exhaust gas purification filter 1 mounted in an exhaust passage. Specifically, (1) PM 2 is accumulated in a stoichiometric atmosphere under a condition of 9 min at the center temperature of the exhaust gas purification filter 1 of 800°C, and (2) the PM 2 is recycled in air atmosphere under a condition of 1 min at the center temperature of the exhaust gas purification filter 1 of 800 to 900°C. The PM 2 accumulation (1) and the PM 2 recycling (2) are repeated, thereby the ash 23 is accumulated on the exhaust gas purification filter 1. The accumulation amount of the ash 23 can be obtained by appropriately removing the exhaust gas purification filter 1 for weight measurement.

Subsequently, the exhaust gas purification filter 1, on which the certain amount of ash 23 is accumulated, is processed as follows: a measurement sample having no sealing part 13 is taken by hollowing at each of the positions, i.e., the position $X_{10}$ 10 mm away from the filter end face 15 on the exhaust-gas inflow side and the central position $X_c$ between the filter end face 15 on the exhaust-gas inflow side and the filter end face 16 on the exhaust-gas outflow side. At this time, the measurement sample at the position $X_{10}$ is taken such that the position 10 mm away from the filter end face 15 on the exhaust-gas inflow side corresponds to the upstream-side end face. In addition, the measurement sample at the central position $X_c$ is taken such that the central position $X_c$ corresponds to the upstream-side end face. Each measurement sample has a columnar shape having a diameter of 30 mm and a length in a filter axis direction of 25 mm. The skin part 14 of each hollowed measurement sample can be formed by cementing, for example.

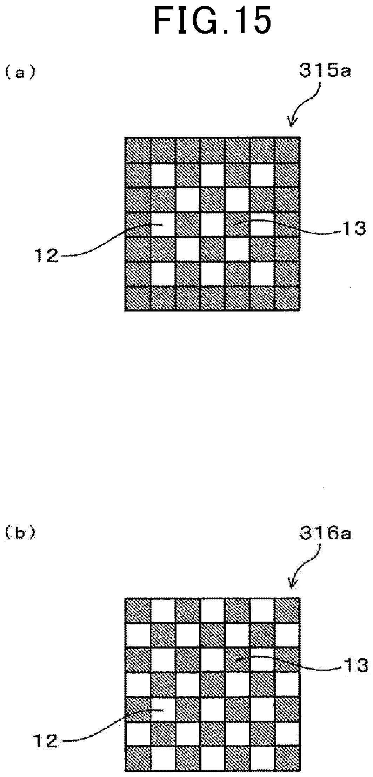

Subsequently, as illustrated in Fig. 14, polyester tapes 315a and 316a are pasted on the respective end faces 315 and 316 in the filter axis direction X of the measurement sample 3. Subsequently, the respective polyester tapes 315a and 316a are partially removed using, for example, a soldering iron such that alternate sealing parts 13 are formed by each of the polyester tapes 315a and 316a. In this way, as illustrated in Fig. 15(a), for example, 13 cells 12 are opened while the remaining cells 12 are closed by the sealing parts 13 made of the polyester tape 315a at the upstream-side end face 315 as the filter end face on the exhaust-gas inflow side of the measurement sample 3. On the other hand, as illustrated in Fig. 15(b), for example, 24 cells 12 are opened while the remaining cells 12 are closed by the sealing parts 13 made of the polyester tape 316a at the downstream-side end face 316 as the filter end face on the exhaust-gas outflow side of the measurement sample 3. That is, the sealing parts 13 made of the polyester tapes 315a and 316a are formed in place of the sealing parts 13 made of ceramics. Although the measurement sample 3, in which the sealing parts 13 are made of the polyester tapes 315a and 316a, for measurement of the gas permeability coefficient, has been described herein, similar results are obtained using a measurement sample 3 having sealing parts 13 made of ceramics.

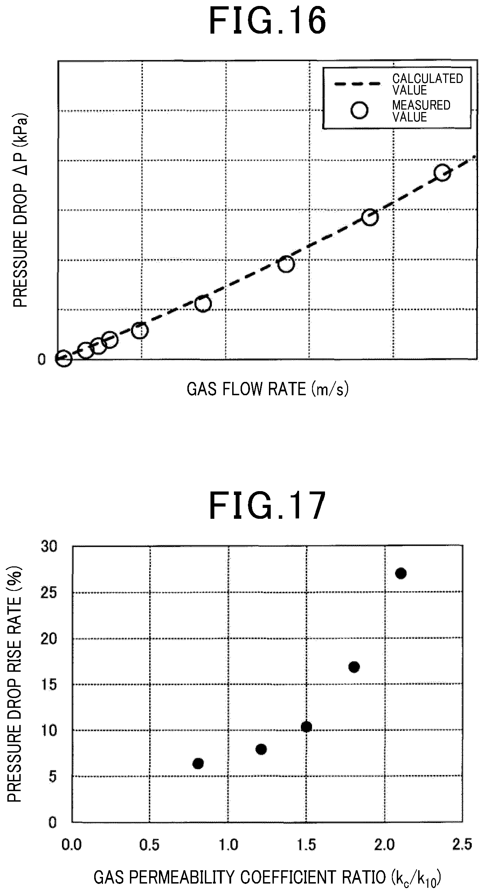

Subsequently, as illustrated in Fig. 14, gas is passed from the upstream-side end face 315 of the measurement sample 3 toward the downstream-side end face 316 thereof, and a relationship between gas flow rate and pressure loss is determined by a perm porometer 4. Specifically, pressure loss is measured when gas flow rate is changed. In Fig. 14, an arrow indicates gas flow. A relation diagram between the gas flow rate (X axis) and the pressure loss (Y axis) is determined. Fig. 16 illustrates an example of the relation diagram between the gas flow rate (X axis) and the pressure loss (Y axis). The relation diagram shows measured values (plot points) obtained using the perm porometer 4 and calculated values (broken line) obtained by the following formulas (i) to (viii). The formulas (i) to (viii) are now described.

Pressure loss ΔP (Pa) of the exhaust gas purification filter 1, the sum $\Delta P_{inlet/exit}$ (Pa) of inlet pressure loss $\Delta P_{inlet}$ during gas flow into a cell 12 and exit pressure loss $\Delta P_{exit}$ during gas flow out of the cell 12, pressure loss $\Delta P_{channel}$ (Pa) during passing of gas through the cell 12, and pressure loss $\Delta P_{wall}$ (Pa) during passing of gas through the partition wall 11 satisfy the relationship of the formula (i).

$$\Delta P = \Delta P_{inlet/exit} + \Delta P_{channel} + \Delta P_{wall} \cdots (i)$$

$\Delta P_{inlet/exit}$, the opening area $A_{open}$ (m$^2$) of the cell 12, the opening area $A_{in}$ (m$^2$) of the cell 12 at the filter end face 15 on the exhaust-gas inflow side, the gas flow rate $V_{channel}$ (m/s) within the cell 12, and the air density $\rho$ (kg/m$^3$) satisfy the relationship of formula (ii).

[Math. 1]

$$\Delta P_{inlet/exit} = \left[1 - \frac{A_{open}}{A_{in}}\right]^2 \cdot \frac{1}{2} \rho\, V^2{}_{channel} + \left(0.04 - \left(\frac{1}{0.582 + \dfrac{0.0418}{1.1 - \left[\dfrac{A_{open}}{A_{in}}\right]^{-0.5}}}\right)\right)^2 \cdot \frac{1}{2} \rho\, V^2{}_{channel}$$

$$\cdots (ii)$$

$\Delta P_{channel} + \Delta P_{wall}$, the gas permeability coefficient k (m$^2$), length L (m) in the filter axis direction X of the exhaust gas purification filter 1, hydraulic diameter $a_1$ (m) of the cell 12,

thickness w (m) of the partition wall 11, frictional coefficient F (dimensionless) within the cell 12, Reynolds number (dimensionless), gas viscosity $\mu$ (Pa·s), and the gas flow rate $V_{channel}$ (m/s) within the cell 12 satisfy the relationships of the formulas (iii) to (viii). In the formula (iii), e denotes the exponential function exp.

[Math. 2]

$$\Delta P_{channel} + \Delta P_{wall} = \left\{ \frac{(e^{g_1}+1)(e^{g_2}+1)(g_2 - g_1)}{4(e^{g_2} - e^{g_1})} + \frac{A_2}{2} \right\} \cdot \frac{\mu\, V_{channel} a_1 w}{4Lk} \quad \cdots (iii)$$

[Math. 3]

$$g_1 = A_1 - \sqrt{A_1{}^2 + 2A_2} \quad \cdots (iv)$$

[Math. 4]

$$g_2 = A_1 + \sqrt{A_1{}^2 + 2A_2} \quad \cdots (v)$$

[Math. 5]

$$A_1 = \frac{k}{a_1 w} \frac{4L}{a_1} Re \quad \cdots (vi)$$

[Math. 6]

$$A_2 = \frac{4Fk}{a_1 w}\left[\frac{L}{a_1}\right]^2 \qquad \cdots (vii)$$

[Math. 7]

$$Re = \frac{\rho\, V_{channel} a_1}{\mu} \qquad \cdots (viii)$$

Pressure loss values are calculated based on the formulas (i) to (viii) as described above. The broken line based on the calculated values shown in the relation diagram between the gas flow rate (X axis) and the pressure loss (Y axis) illustrated in Fig. 16 shows pressure loss values obtained by calculation. As understood by the formulas (i) to (viii), the pressure loss values may be calculated by measuring values of the filter length L, the cell opening area $A_{open}$, the hydraulic diameter $a_1$, and the thickness w of the partition wall 11 except the gas permeability coefficient k, and such values are each constant regardless of the gas flow rate. It is therefore possible to derive the calculated value in the relation diagram between the gas flow rate (X axis) and the pressure loss (Y axis) by assigning an appropriate value to the gas permeability coefficient.

For example, when a large value is assigned to the gas permeability coefficient, the resultant pressure loss value becomes lower than the measured value, i.e., the calculated value is lower than the measured value. On the other hand, when a small value is assigned to the gas permeability coefficient, the calculated value is higher than the measured value. To obtain a calculated value most approximate to the measured value, a least-squares method is used to calculate a gas permeability coefficient k enabling the minimum difference between the calculated value and the measured value. Such a calculated value corresponds to the gas permeability coefficient k. This means that the gas permeability coefficient k is a value obtained by reversely calculating a gas permeability coefficient by the formulas (i) to (viii) from a measured value of pressure loss determined by a perm porometer. In this way, it is possible to obtain the gas permeability coefficients $k_{10}$ and $k_c$ at the predetermined positions in a state where a certain amount of ash is accumulated.

The exhaust gas purification filter 1 may exhibit sufficient effects while being used in a state where the partition wall 11 carries no catalyst. The exhaust gas purification filter 1 may also be used in a state where the partition wall 11 carries a catalyst if it is possible to provide the initial PM collection efficiency, reduce the initial pressure loss, and suppress the increase in pressure loss after ash accumulation by optimizing a catalyst coating amount and a catalyst coating method. When the partition wall 11 carries a catalyst, the amount of the catalyst is 30 to 150 g/L, for example. In general, when a catalyst is carried, some of the pores 110 in the partition wall 11 are closed by the catalyst. The catalyst may be carried using various techniques, for example, the catalyst is homogenously carried within the partition wall 11, or a larger amount of catalyst is carried in a surface of the partition wall 11. The PM collection efficiency may be increased or reduced depending on such carrying techniques. The surface opening size at the surface of the partition wall 11 is important in this disclosure. Considering this, the catalyst is preferably carried using the technique for homogenously carrying the catalyst within the partition wall 11. According to the technique for homogenously carrying the catalyst within the partition wall 11, the ratio calculated by the formula 100 × (A - B) / B is not different from that in the case where no catalyst is carried. Although this tends to decrease the PM collection efficiency and increase the initial pressure loss, operations and effects of pressure loss after accumulation of the ash 23 are not changed.

<Experimental Example>

Exhaust gas purification filters of examples and comparative examples are now described. In this experimental example, each exhaust gas purification filter mainly includes cordierite having a chemical composition of $SiO_2$: 45 to 55 mass%, $Al_2O_3$: 33 to 42 mass%, and MgO: 12 to 18 mass%. It is noted that "mainly including cordierite" means that the exhaust gas purification filter contains cordierite by 50 mass% or more. In production of the exhaust gas purification filters of the experimental example, therefore, a cordierite formation material including a Si source, an Al source, and a Mg source is used to produce cordierite through firing.

-Production of Exhaust Gas Purification Filter-

(Example 1)

To produce the exhaust gas purification filter of example 1, a cordierite formation material was prepared by blending porous silica (Si source), talc (Mg source), and aluminum hydroxide (Al source) in a blending ratio (mass%) as shown in Table 1.

The porous silica had a bulk density of 0.18 g/cm$^3$. The bulk density was measured using a tap-density fluidity and adhesion measuring apparatus, Tap Denser from Seishin Enterprise Co., Ltd. Specifically, a cylinder of the measuring apparatus was filled with silica, and then the silica was compressed by tapping, and the bulk density was calculated from mass of the compressed silica and volume of the cylinder. Two types of aluminum hydroxide were used, including one having an average of 3 μm and the other having an average particle size of 8 μm. The term "average particle size" refers to particle size at a volumetric integrated value of 50% in a particle size distribution obtained by a laser diffraction/scattering method.

Water (solvent), methyl cellulose (binder), and a dispersant were added to the cordierite formation material in a blending ratio (mass%) as shown in Table 1 and mixed by a kneader, thereby a green body containing the cordierite formation material was prepared. The dispersant mainly suppresses mutual aggregation of particles and thus improves peptization. Specifically, polyoxyethylene polyoxypropylene glyceryl ether having an average molecular weight of 4550 was used.

[Table 1]

| | | Example 1 |
|---|---|---|
| | Average particle diameter (μm) | Blending ratio (mass%) |
| Porous silica (bulk density 0.18 g/cm$^3$) | 5 | 20.8 |
| Talc | 14 | 35.2 |
| Aluminum hydroxide | 3 | 35.2 |
| Aluminum hydroxide | 8 | 8.8 |
| Methyl cellulose | - | 9 |
| Dispersant | - | 7 |
| Water | - | 67 |

In a material system using porous silica as in the example 1, since many interparticle gaps exist, a large amount of solvent (herein, water) is required for forming the green body. Strong green-body kneading is effective in improving the peptization in a condition of such a large amount of solvent. However, such strong kneading suppresses the aggregation of particles, making it difficult to directly check whether particles are dispersed in the green body.

Hence, in this experimental example, green-body density deviation rate was introduced as a new index of particle dispersibility in a kneaded green body. Specifically, a green body is taken before being extruded by a die, and green-body samples are extracted at eight random points. The extracted green-body samples are each loaded into a measuring device 25 mm in diameter and 20 mm in length of a pressurization measuring instrument "Autograph" from SHIMADZU CORPORATION, and compressed at a pressure of 1 kN and then removed. Green-body density is calculated from volume and weight of the removed green body. The average of the green-body densities calculated for the green bodies at the eight points is defined as measured green-body density. On the other hand, a green-body density beforehand calculated from a material blending ratio is defined as calculated green-body density. The particle dispersibility can be determined by checking a difference (deviation rate) of the measured green-body density with respect to the calculated green-body density. As the measured green-body density becomes smaller than the calculated green-body density, a larger amount of air exists on a particle surface due to poorer wettability of the dispersant, leading to lower particle dispersibility. In contrast, as the measured green-body density becomes closer to the calculated green-body density, the particle dispersibility becomes higher.

In the example 1, speed of the kneader and/or the number of times of repeatedly charging the green body into the kneader was arbitrarily changed to adjust a green-body density deviation rate (described below) to less than 10%, and the resultant green body was used. Increasing the speed of the kneader tends to reduce the green-body density deviation rate. A larger number of times of repeatedly charging the green body into the kneader also tends to reduce the green-body density deviation rate.

Green-body density deviation rate (%) = 100 × ((calculated green-body density) − (measured green-body density)) / (calculated green-body density)

Such an adjusted green body was formed by extrusion into a honeycomb shape. The formed product was dried and then cut into a predetermined length.

Subsequently, the formed product was fired at 1430°C to produce a sintered compact having a honeycomb structure.

Subsequently, a dipping process was used to alternately plug the exhaust-gas inflow end faces and the exhaust-gas outflow end faces of cells of the sintered compact having the honeycomb structure by a slurry containing the same type of ceramic materials as the sintered compact. The sintered compact was then fired, so that the sealing parts were formed.

In this way, the exhaust-gas purification filter of the example 1 was produced.

(Examples 2 to 8)

Average particle size and bulk density of the porous silica in the cordierite formation material of the example 1 were each modified. Larger average particle size of the porous silica increases pore size of the formed partition wall, while smaller bulk density of the porous silica increases porosity of the formed partition wall. In blending of two types of aluminum hydroxide having different particle sizes, increasing a ratio of particles having a larger particle size increases the average surface opening size. Further, the pore size and the average surface opening size can each be increased by increasing temperature rise rate in a range from 1200 to 1430°C during firing. Exhaust-gas purification filters were produced while such conditions were variously combined. Pore surface area can be increased by increasing a volume ratio of silica in the mixed material. The volume ratio of silica can be increased by decreasing bulk density of silica or making particle size distribution of silica more uniform. Further, the pore surface area can be increased by decreasing the green-body density deviation rate. The blending ratio of the green body was the same as in the example 1. As in the example 1, speed of the kneader and/or the number of times of charging the green body into the kneader was arbitrarily changed to adjust the green-body density deviation rate to less than 10%, and the resultant body was used to produce exhaust-gas purification filters of examples 2 to 8.

(Comparative Example 1)

To produce an exhaust gas purification filter of comparative example 1, a cordierite formation material was prepared by blending porous silica (Si source), talc (Mg source), and aluminum hydroxide (Al source) in a blending ratio (mass%) as shown in Table 2. The porous silica had a bulk density of 0.18 $g/cm^3$.

Water (solvent), methyl cellulose (binder), and a lubricant were added to the cordierite formation material in a blending ratio as shown in Table 2 and mixed by a kneader, thereby a green body containing the cordierite formation material was prepared. The lubricant is to improve slidability of the green body on a metal portion of a forming machine and on a metal portion of a die surface and thus increase forming speed. Rapeseed oil, a vegetable oil, was used as the lubricant. The green-body density deviation rate was adjusted to 10% or more by arbitrarily changing speed of the kneader and/or the number of times of charging the green body into the kneader. While such an adjusted green body was used, the exhaust gas purification filter of the comparative example 1 was subsequently produced in the same way as the example 1.

[Table 2]

| | Comparative example 1 | |
|---|---|---|
| | Average particle diameter (μm) | Blending ratio (mass%) |
| Porous silica (bulk density 0.18 $g/cm^3$) | 12 | 20.8 |
| Talc | 14 | 35.2 |
| Aluminum hydroxide | 5 | 44 |
| Methyl cellulose | - | 9 |
| Lubricant | - | 7 |
| Water | - | 64 |

(Comparative Example 2)

Average particle size and bulk density of the porous silica in the cordierite formation material of the comparative example 1 were each modified. While other conditions were the same as in the comparative example 1, the green body was adjusted to obtain a green-body density deviation rate of 10% or more, and an exhaust-gas purification filter of comparative example 2 was produced.

(Comparative Example 3)

To produce an exhaust gas purification filter of comparative example 3, a cordierite formation material was prepared by blending molten silica (Si source), talc (Mg source), and aluminum hydroxide (Al source) in a blending ratio (mass%) as shown in Table 3. The molten silica had a bulk density of 1.30 $g/cm^3$.

Water (solvent), methyl cellulose (binder), a lubricant (rapeseed oil), and graphite were added to the cordierite formation material in a blending ratio as shown in Table 3 and mixed by a kneader, thereby a green body containing the cordierite formation material was prepared. The green-body density deviation rate was adjusted to less than 10% by arbitrarily changing speed of the kneader and/or the number of times of charging the green body into the kneader. While such an adjusted green body was used, the exhaust gas purification filter of the comparative example 3 was subsequently produced in the same way as the comparative example 1.

[Table 3]

| | Comparative example 3 | |
|---|---|---|
| | Average particle diameter ($\mu$m) | Blending ratio (mass%) |
| Molten silica (bulk density 1.30 $g/cm^3$) | 18 | 19.4 |
| Talc | 20 | 35.4 |
| Aluminum hydroxide | 5 | 45.2 |
| Graphite | 25 | 25 |
| Methyl cellulose | - | 9 |
| Lubricant | - | 5.5 |
| Water | - | 43 |

(Comparative Examples 4 to 6)

Average particle size of molten silica, average particle size of talc, and a blending ratio of graphite in the cordierite formation material of the comparative example 3 were each modified. While other conditions were the same as in the comparative example 3, the green body was adjusted to obtain a green-body density deviation of less than 10%, and exhaust-gas purification filters of comparative examples 4 to 6 were produced.

-Measurement of Partition Wall Properties-

The exhaust gas purification filters of the examples and the comparative examples were subjected to measurement of partition wall properties. Specifically, the average pore size A and porosity of each partition wall were measured according to the above-described measurement method. For the measurement, a mercury porosimeter "AutoPore IV 9500" from SHIMADZU CORPORATION was used. The average surface opening size B of pores in the partition-wall surface was measured according to the above-described measurement method. For the measurement, SEM "Quanta 250 FEG" from FEI Company was used. Image analysis software "WinROOF Ver. 7.4" from MITANI CORPORATION was used. A ratio calculated by the formula $100 \times (A - B) / B$ was obtained from the resultant average pore size A of the partition wall and the resultant average surface opening size B of pores in the partition-wall surface. The pore surface area (GSA) of the partition wall 11 was obtained according to the above-described measurement method. For the measurement, microstructure simulation software "GeoDict 2017" available from SCSK CORPORATION was used. The tortuosity coefficient of the pore was calculated by the formula of ((pore surface area [$m^2/m^3$] of partition wall 11) $\times$ (porosity [%] of partition wall 11) / 100) / (average pore size [$\mu$m] of partition wall 11) using the resultant pore surface area of the partition wall and the measured average pore size and porosity of the partition wall. A value of the gas-permeability coefficient ratio $k_c/k_{10}$ was determined according to the above-described measurement method. For the measurement, a perm porometer "CEP-1100AXSHJ" from Porous Materials Inc. was used.

-Evaluation-

Initial PM collection efficiency, initial pressure loss, and pressure loss after ash accumulation were determined for each of the exhaust gas purification filters. The initial PM collection efficiency, the initial pressure loss, and the pressure loss after ash accumulation were determined using an exhaust gas purification filter having a cell structure including a constitution of φ 118.4 mm (filter diameter) × L 120 mm (filter length), partition-wall thickness of 8.5 mil, and the number of cells of 300 cpsi.

(Initial PM Collection Efficiency and Initial Pressure Loss)

The initial PM collection efficiency was measured as follows. A produced exhaust gas purification filter was attached within an exhaust pipe of a direct-injection gasoline engine, and an exhaust gas containing PM was passed through the exhaust gas purification filter. At this time, the number $N_{in}$ of PM particles in the exhaust gas before flowing into the exhaust gas purification filter and the number $N_{out}$ of PM particles in the exhaust gas flowing out of the exhaust gas purification filter were measured, and the initial PM collection efficiency was calculated by a formula $100 \times (N_{in} - N_{out}) / N_{in}$. The measurement was performed under a condition of temperature 450°C and exhaust-gas flow rate 2.8 $m^3$/min. The number of PM particles was measured using a PM particle number counter "AVL-489" from AVL List GmbH. The initial pressure loss was measured as follows. Pressures before (upstream of) and after (downstream of) the exhaust gas purification filter were measured by a pressure sensor concurrently with the measurement of the initial PM collection efficiency, and a difference between the pressures was defined as initial pressure loss. The measurement was performed under a condition of temperature 720°C and exhaust-gas flow rate 11.0 $m^3$/min. Any measurement was performed using an exhaust gas purification filter coated with no catalyst and in an initial state where no PM is accumulated.
In this experimental example, the initial PM collection efficiency of 85% or more was defined as "A", showing that the initial PM collection efficiency was sufficiently obtained. The initial PM collection efficiency of 75% or more and less than 85% was defined as "B", showing that the initial PM collection efficiency was sufficiently obtained. The initial PM collection efficiency of less than 75% was defined as "C", showing that the initial PM collection efficiency was not obtained. The initial pressure loss of 8 kPa or less was defined as "A", showing that the effect of reducing the initial pressure loss was sufficiently obtained. The initial pressure loss of more than 8 kPa and 9 kPa or less was defined as "B", showing that the effect of reducing the initial pressure loss was sufficiently obtained. The initial pressure loss of more than 9 kPa was defined as "C", showing that the effect of reducing the initial pressure loss was not obtained.

(Pressure Loss after Ash Accumulation)

Ash was accumulated in a quantity of 20 to 40 g/L on the exhaust gas purification filter coated with no catalyst and in an initial state where no PM is accumulated. The ash was accumulated as follows: gasoline containing 2% ash derived from engine oil was used to power a gasoline engine, so that the ash was accumulated on an exhaust gas purification filter mounted in an exhaust passage. Specifically, the ash was accumulated on the exhaust gas purification filter by repeating (1) PM 2 accumulation: PM was accumulated in a stoichiometric atmosphere under a condition of 9 min at the center temperature 800°C of the exhaust gas purification filter, and (2) PM 2 recycling: the PM was recycled in air atmosphere under a condition of 1 min at the center temperature 800 to 900°C of the exhaust gas purification filter. At this time, the accumulation amount of the ash was grasped by appropriately removing the exhaust gas purification filter for weight measurement. After that, as with the initial pressure loss, respective pressures before and after the exhaust gas purification filter were measured by a pressure sensor, and a difference between the pressures was defined as pressure loss after ash accumulation. In this experimental example, the pressure loss after accumulation of 30 g/L ash of 11 kPa or less was defined as "A", showing that the effect of suppressing an increase in pressure loss after ash accumulation was sufficiently obtained. Similarly, the pressure loss after the ash accumulation of more than 11 kPa and 13 kPa or less was defined as "B", showing that the effect of suppressing an increase in pressure loss after ash accumulation was sufficiently obtained. The pressure loss after the ash accumulation of more than 13 kPa was defined as "C", showing that the effect of suppressing an increase in pressure loss after ash accumulation was not obtained. Assuming the initial pressure loss was $P_{fresh}$ and the pressure loss after ash accumulation was $P_{ash\text{-}loaded}$, a pressure-loss increase rate after ash accumulation relative to the initial pressure loss was obtained by a formula $100 \times (P_{ash\text{-}loaded} - P_{fresh}) / P_{fresh}$. Fig. 17 illustrates a relationship between the gas permeability coefficient ratio $k_c/k_{10}$ and the pressure-loss increase rate. It is noted that Fig. 17 shows results on the exhaust gas purification filter of the example 3 as a representative of the examples.
The above experimental results are collectively shown in Table 4.

[Table 4]

| | Body density deviation rate (%) | Partition wall | | | | | | | Evaluation | | |
|---|---|---|---|---|---|---|---|---|---|---|---|
| | | Average pore size A ($\mu$m) | Porosity (%) | Average surface opening size B ($\mu$m) | $100 \times (A - B) / B$ (%) | Pore surface area (GSA) ($m^2/m^3$) | Tortuosity coefficient of pore ($\times 10^3$) | $k_0/k_{10}$ | Initial PM collection efficiency | Initial pressure loss | After ash accumulation |
| Example 1 | <10 | 8.8 | 70 | 8.7 | 1.1 | 157339 | 12.5 | $\leq$1.5 | A | B | A |
| Example 2 | <10 | 13.3 | 64 | 12.2 | 9.0 | 142476 | 6.9 | $\leq$1.5 | A | B | A |
| Example 3 | <10 | 14.5 | 68 | 13.4 | 8.2 | 138513 | 6.5 | $\leq$1.5 | A | A | A |
| Example 4 | <10 | 7.1 | 54 | 6.8 | 4.4 | 162954 | 12.4 | $\leq$1.5 | A | B | A |
| Example 5 | <10 | 9.3 | 58 | 8.8 | 5.7 | 155688 | 9.7 | $\leq$1.5 | A | B | A |
| Example 6 | <10 | 12.3 | 55 | 11.9 | 3.4 | 145779 | 6.5 | $\leq$1.5 | A | B | A |
| Example 7 | <10 | 15.2 | 61 | 11.7 | 29.9 | 156631 | 6.3 | $\leq$1.5 | B | A | A |
| Example 8 | <10 | 16.5 | 65 | 15.3 | 7.8 | 151693 | 6.0 | $\leq$1.5 | B | A | A |
| Comparative example 1 | 10$\leq$ | 15.0 | 66 | 15.6 | -3.8 | 121086 | 5.3 | 1.5< | C | A | B |
| Comparative example 2 | 10$\leq$ | 13.2 | 56 | 13.4 | -1.5 | 126938 | 5.4 | 1.5< | C | B | B |
| Comparative example 3 | <10 | 15.0 | 66 | 18.4 | -18.5 | 108977 | 4.8 | 1.5< | C | A | C |
| Comparative example 4 | <10 | 13.2 | 56 | 15.2 | -13.2 | 114244 | 4.8 | 1.5< | C | B | C |
| Comparative example 5 | <10 | 21 | 52 | 16.1 | 30.4 | 98079 | 2.4 | 1.5< | C | B | C |

| Comparative example 6 | <10 | 5.0 | 65 | 4.8 | 4.2 | 169891 | 22.1 | 1.5< | A | C | C |
|---|---|---|---|---|---|---|---|---|---|---|---|

As shown in Table 4, each of the exhaust gas purification filters of the examples 1 to 8, in which assuming the average pore size of the partition wall is A $\mu$m and the average surface opening size of the partition-wall surface is B $\mu$m, A $\geq$ B is satisfied, and a ratio calculated by the formula $100 \times (A - B) / B$ and the tortuosity coefficient of the pores 110 within the partition wall 11 are each within the specific range defined in this disclosure, has been confirmed to obtain the initial PM collection efficiency, reduce the initial pressure loss, and suppress an increase in pressure loss after ash accumulation.

In contrast, each of the exhaust gas purification filter of the comparative examples 1 to 6, in which the ratio calculated by the formula $100 \times (A - B) / B$ or the tortuosity coefficient of the pores 110 within the partition wall 11 is out of the specific range defined in this disclosure, has not achieved one of the following: obtaining the initial PM collection efficiency, reducing the initial pressure loss, and suppressing an increase in pressure loss after ash accumulation.

Each of the exhaust gas purification filter of the examples 1 to 8 has a value of a gas-permeability coefficient ratio $k_c/k_{10}$ of 1.5 or less in a state where 20 to 40 g/L of ash is accumulated. According to such a configuration, as illustrated in Fig. 17, the pressure loss after ash accumulation can be securely suppressed.

The disclosure should not be limited to the above-described embodiment and experimental example, and various modifications or alterations thereof may be made within the scope without departing from the gist of the disclosure. The configurations described in the embodiment and the experimental example may be appropriately combined. Specifically, although the disclosure has been described in accordance with one embodiment, it is understood that the disclosure is not limited to such an embodiment or the relevant structures. The disclosure also covers various modifications and variations within the equivalent scope. In addition, various combinations or modes, and other combinations or modes including one additional element, two or more additional elements, or less elements may also be included within the scope of the category or the technical idea of the disclosure.

**Claims**

1. An exhaust gas purification filter (1) disposed in an exhaust passage of a gasoline engine, comprising:

    a partition wall (11) having many pores (110);
    a plurality of cells (12, 121, 122) separated by the partition wall; and
    sealing parts (13) that alternately seal the cells at either end of the filter, wherein
    assuming average pore size of the partition wall is A $\mu$m and average surface opening size of a surface of the partition wall is B $\mu$m,
    A $\geq$ B is satisfied,
    a ratio calculated by a formula $100 \times (A - B) / B$ is 30% or less, and
    a tortuosity coefficient of the pores within the partition wall is $6.0 \times 10^3$ or more and $12.5 \times 10^3$ or less.

2. The exhaust gas purification filter according to claim 1, wherein
   the average pore size A of the partition wall is 5 $\mu$m or more and less than 15 $\mu$m.

3. The exhaust gas purification filter according to claim 1 or 2, wherein

    in a state where 20 to 40 g/L of the ash (23) is accumulated,
    assuming the partition wall has a gas permeability coefficient $k_{10}$ at a position ($X_{10}$) 10 mm away from a filter end face (15) on an exhaust-gas inflow side and a gas permeability coefficient $k_c$ at a central position ($X_c$) between the filter end face on the exhaust-gas inflow side and a filter end face (16) on an exhaust-gas outflow side,
    a value of a gas-permeability coefficient ratio $k_c/k_{10}$ is 1.5 or less.

# FIG.1

# FIG.2

# FIG.3

# FIG.4

# FIG.5

114

113

# FIG.6

INTENSITY

THRESHOLD

gray value

# FIG.7

# FIG.8

# FIG.9

# FIG.10

# FIG.11

# FIG.12

# FIG.13

# FIG.14

# FIG.15

(a)

315a

12

13

(b)

316a

13

12

# FIG.16

# FIG.17

EP 3 919 152 A1

## INTERNATIONAL SEARCH REPORT

| International application No. |
|---|
| PCT/JP2020/006165 |

A. CLASSIFICATION OF SUBJECT MATTER
B01D 9/20(2006.01)i; F01N 3/022(2006.01)i
FI: F01N3/022 C ZAB; B01D39/20 D

According to International Patent Classification (IPC) or to both national classification and IPC

B. FIELDS SEARCHED

Minimum documentation searched (classification system followed by classification symbols)
B01D39/20; F01N3/022

Documentation searched other than minimum documentation to the extent that such documents are included in the fields searched
Published examined utility model applications of Japan      1922–1996
Published unexamined utility model applications of Japan    1971–2020
Registered utility model specifications of Japan            1996–2020
Published registered utility model applications of Japan    1994–2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2016-524584 A (CORNING INC.) 18.08.2016 (2016-08-18) paragraphs [0024]-[0143], fig. 1-36 | 1-3 |
| A | WO 2016/196709 A1 (SCIENTIFIC DESIGN COMPANY, INC.) 08.12.2016 (2016-12-08) paragraphs [0020]-[0111], fig. 1-8 | 1-3 |
| A | WO 2004/113252 A1 (IBIDEN CO., LTD.) 29.12.2004 (2004-12-29) page 9, line 8 to page 59, line 27 | 1-3 |
| A | WO 2013/145314 A1 (IBIDEN CO., LTD.) 03.10.2013 (2013-10-03) paragraphs [0024]-[0098], fig. 1-10 | 1-3 |
| A | WO 2007/097056 A1 (IBIDEN CO., LTD.) 30.08.2007 (2007-08-30) paragraphs [0016]-[0103], fig. 1-8 | 1-3 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 24 April 2020 (24.04.2020) | 12 May 2020 (12.05.2020) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

International application No.

PCT/JP2020/006165

| Patent Documents referred in the Report | Publication Date | Patent Family | Publication Date |
|---|---|---|---|
| JP 2016-524584 A | 18 Aug. 2016 | US 2014/0339744 A1 paragraphs [0059]-[0148], fig. 1-36 EP 2999675 A1 | |
| WO 2016/196709 A1 | 08 Dec. 2016 | EP 3302751 A1 | |
| WO 2004/113252 A1 | 29 Dec. 2004 | US 2006/0068159 A1 paragraphs [0055]-[0306] EP 1538133 A1 | |
| WO 2013/145314 A1 | 03 Oct. 2013 | US 2015/0121826 A1 paragraphs [0055]-[0247], fig. 1-10 EP 2832413 A1 | |
| WO 2007/097056 A1 | 30 Aug. 2007 | US 2007/0196620 A1 paragraphs [0041]-[0148], fig. 1-8 EP 1826370 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019068163 A

- JP 2006095352 A

**Non-patent literature cited in the description**

- **J. OHSER ; F. MUCKLICH.** Statistical Analysis of Microstructures in Materials Science. Wiley and Sons, 2000, 115